# FASCICULE DE BREVET EUROPEEN

(11) **EP 0 449 735 B1**
(45) Date de publication et mention de la délivrance du brevet: **02.11.1994**
(21) Numéro de dépôt: 91400840.4
(22) Date de dépôt: 28.03.1991
(51) Int. Cl.: C02F 1/46

(54) **Réacteur de dépollution électrolytique**
Reaktor zur elektrolytischen Reinigung
Electrolytic de-pollution reactor

(30) Priorité: 28.03.1990 FR 9003952
(43) Date de publication de la demande: 02.10.1991
(73) Titulaire: ELECTRICITE DE FRANCE Service National, 75008 Paris (FR)
(72) Inventeur: Leclerc, Oliver, F-76000 Rouen (FR); Lahitte, Claude, F-92000 Nanterre (FR)
(74) Mandataire: Martin, Jean-Jacques

(56) Documents cités:
- US-A- 3 620 955
- US-A- 3 682 798
- US-A- 4 226 685

## Description

La présente invention concerne un dispositif pour la dépollution des effluents aqueux, ainsi qu'un procédé mettant en oeuvre ce dispositif.

La pollution des effluents aqueux par des rejets contenant des métaux lourds représente une part considérable des nuisances industrielles. On estime en effet que 30% de la pollution industrielle est due au seul secteur du traitement de surface. De ce fait, les contraintes en matière d'environnement dans ce secteur d'activité sont de plus en plus sévères.

En outre, les effluents peuvent contenir une forte proportion d'espèces réductrices qui consomment l'oxygène dissous dans l'eau, au détriment des organismes ou microorganismes vivants.

De nombreuses techniques de dépollution ont été développées : précipitation-filtration, traitement par des résines échangeuses d'ions, cémentation, osmose inverse, électrodéposition. Cette dernière technique a été particulièrement exploitée.

Il y a encore quelques années, la majorité des réacteurs électrochimiques utilisaient des électrodes se présentant sous la forme de plaques pleines. L'émergence progressive du génie électrochimique a contribué au développement de systèmes utilisant des cathodes volumiques particulièrement adaptées à la récupération de composés présents en faible concentration dans l'électrolyte. L'intérêt d'une telle cathode est de pouvoir proposer de grandes surfaces d'électrode par unité de volume ainsi que des vitesses de transfert de matière élevées.
Ce type de cathode met en oeuvre par exemple un lit granulaire spécifique à travers lequel l'effluent aqueux percole, ou une mousse de nickel, ou un déployé métallique.
Les anodes utilisées dans ces réacteurs sont généralement en titane ruthénié. Ces électrodes inattaquables sont insensibles à la formation d'une espèce oxydante à leur surface (oxygène, chlore). Certaines installations utilisent des anodes en graphite (Enviro-cell) mais, dans ce cas, contrairement aux anodes inattaquables un changement régulier des électrodes est à prendre en compte en raison de leur consommation au cours de l'électrolyse.

Ces réacteurs présentent une réelle efficacité pour l'extraction de cations métalliques à partir d'effluents aqueux. Toutefois, le remplacement des cathodes, lorsque le matériau actif qui les constitue est saturé en métal déposé est compliqué et source d'une perte de temps.

Il a donc été proposé de remédier à cet inconvénient en fournissant un réacteur comportant des électrodes dont la matière active est aisément remplaçable.

En particulier, le brevet US-A-4 226 685 décrit un réacteur électrochimique pour l'épuration des effluents aqueux, comportant une cuve dans laquelle sont placées n cathodes et n + 1 anodes alternées, et dont les électrodes correspondant à l'une au moins des polarités sont des électrodes volumiques à remplissage amovibles.

Le matériau conducteur de remplissage à la surface duquel se produit la réduction électrochimique peut être choisi parmi les matériaux à base de carbone. Selon l'invention, il est proposé un réacteur électrochimique pour le traitement d'effluents aqueux, comportant une cuve dans laquelle sont placées de façon alternée des électrodes de polarité opposée, les électrodes correspondant à l'une des polarités étant des électrodes volumiques à remplissage d'un matériau actif granulaire qui sont amovibles, de même que les contre-électrodes correspondant à l'autre polarité, chaque électrode volumique étant délimitée par deux parois qui sont perméables aux effluents aqueux transversalement par rapport à la dimension verticale de l'électrode correspondante, chaque contre-électrode étant elle aussi perméable auxdits effluents s'écoulant transversalement.

L'invention propose également un procédé de traitement d'un effluent aqueux dans un tel réacteur électrochimique, caractérisé en ce qu'il consiste à soumettre l'effluent à une percolation transversale par rapport à la dimension verticale de chaque électrode volumique.

Dans un mode de réalisation particulièrement préféré, les électrodes amovibles ont pour support respectif une cassette constituée par deux cadres approximativement rectangulaires et parallèles sur laquelle sont fixés de manière amovible deux parois perméables aux effluents aqueux et un collecteur situé entre les deux parois, le matériau actif étant maintenu dans l'espace délimité par la cassette et les parois perméables, la cassette étant munie de moyens permettant de la monter de façon amovible sur la cuve, munie elle-même de moyens appropriés, et de moyens permettant de monter les parois perméables et le collecteur de manière amovible sur ladite cassette.

Dans le cas d'un réacteur de petites dimensions, les cadres peuvent être de simples cadres rectangulaires.

Lorsque les dimensions du réacteur sont importantes, les cadres comportent avantageusement des renforts, par exemple sous forme de croisillons.

Le matériau constituant la cassette est un matériau inerte vis-à-vis de l'électrolyse et vis-à-vis des espèces chimiques en présence dans le milieu. Ce matériau peut être choisi parmi le polychlorure de vinyle, le polypropylène, un polychlorure de vinyle surchloré.

La paroi perméable sert d'une part à maintenir le remplissage granulaire à l'intérieur de l'élément amovible, et d'autre part, à générer des turbulences au niveau de l'interface électrode/solution à traiter. La paroi perméable doit présenter une bonne porosité et être réalisée de telle sorte que la perte de charge résultant du passage de la solution à traiter à travers ladite paroi soit le plus faible possible.
Dans une variante particulièrement avantageuse, chaque paroi perméable est constituée par une feuille ayant une bonne porosité et une bonne inertie chimique destinée à contenir les particules de matière active, et par une feuille rigide présentant de grandes ouvertures, destinée à conférer une rigidité suffisante à ladite paroi pour conserver la planéïté de l'électrode.
La feuille destinée à maintenir les particules de matière active est avantageusement un géotextile.
La feuille rigide peut être constituée par tout matériau supportant les conditions opératoires, c'est-à-dire une polarité négative, les conditions de pH, la température.
Cette feuille rigide est de préférence, un grillage de PVC.
Le maillage du grillage doit être supérieur au diamètre des pores des feuilles destinées au maintien des particules de matière active.
Ainsi une paroi perméable particulièrement avantageuse est constituée par un assemblage géotextile/grillage PVC.

Le collecteur métallique est de préférence un déployé métallique approximativement parallèle aux deux cadres. qui permet de répartir uniformément le courant dans l'ensemble du lit granulaire. Il est surmonté d'une amenée de courant qui permet de le connecter aux bornes prévues à cet effet sur l'électrolyseur.

Lorsque le lit granulaire est saturé en métal électrodéposé, il suffit de retirer la cathode amovible hors de la cuve, de retirer les parois perméables et le déployé métallique qui sont eux-mêmes montés de manière amovible sur la cassette. On récupère alors le lit granulaire que l'on traite de manière classique pour récupérer le métal déposé. Parallèlement, on introduit une nouvelle cathode amovible comportant un lit granulaire neuf ou régénéré pour effectuer une autre opération d'électrolyse.

Une variante du procédé de mise en oeuvre du réacteur selon l'invention consiste à utiliser comme anode l'électrode volumique dont le lit granulaire est saturé en métal déposé. Cette électrode fonctionne alors comme une anode soluble, ce qui rend possible un électroaffinage du métal récupéré.

Lorsque dans le réacteur selon l'invention, les anodes sont des électrodes volumiques, le remplissage granulaire utilisé doit être capable de supporter sans dégradation les réactions d'oxydation qui vont se produire à sa surface. On peut également utiliser par exemple des granules en titane ruthénié ou en titane platiné. De telles électrodes vont permettre un traitement électrolytique de la Demande Chimique en Oxygène (DCO). Il est ainsi possible d'amener la DCO dans un effluent à une valeur compatible avec celle requise par les normes de rejets alors en vigueur (dans la mesure où les composés responsables de cette pollution sont électroactifs ou peuvent réagir avec l'oxygène formé à l'anode).

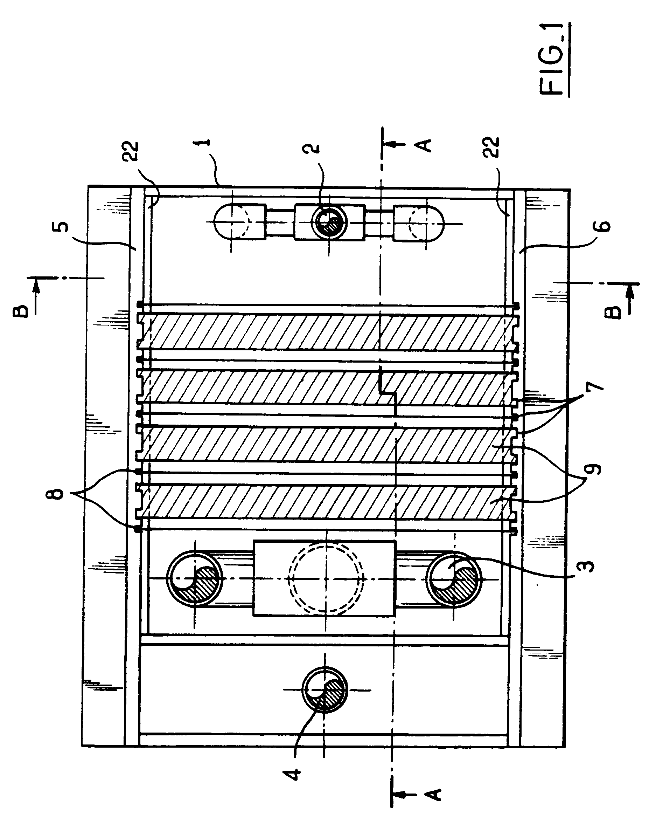

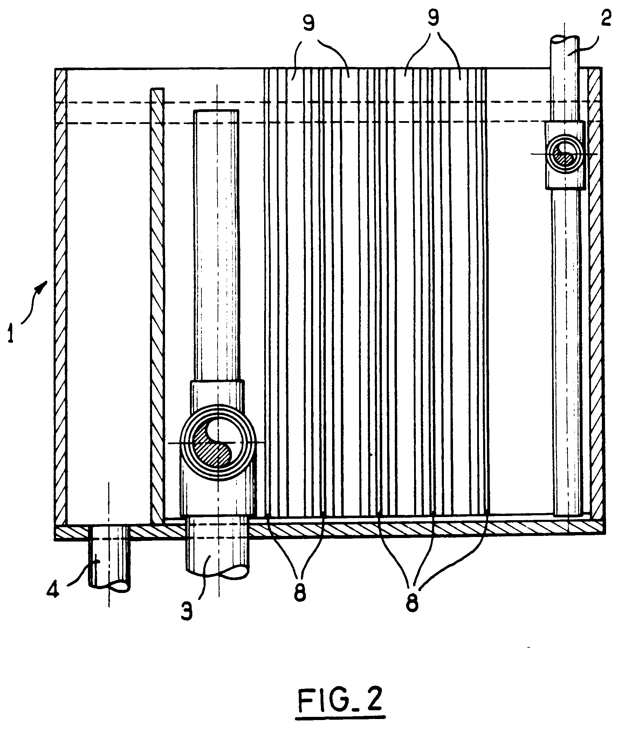

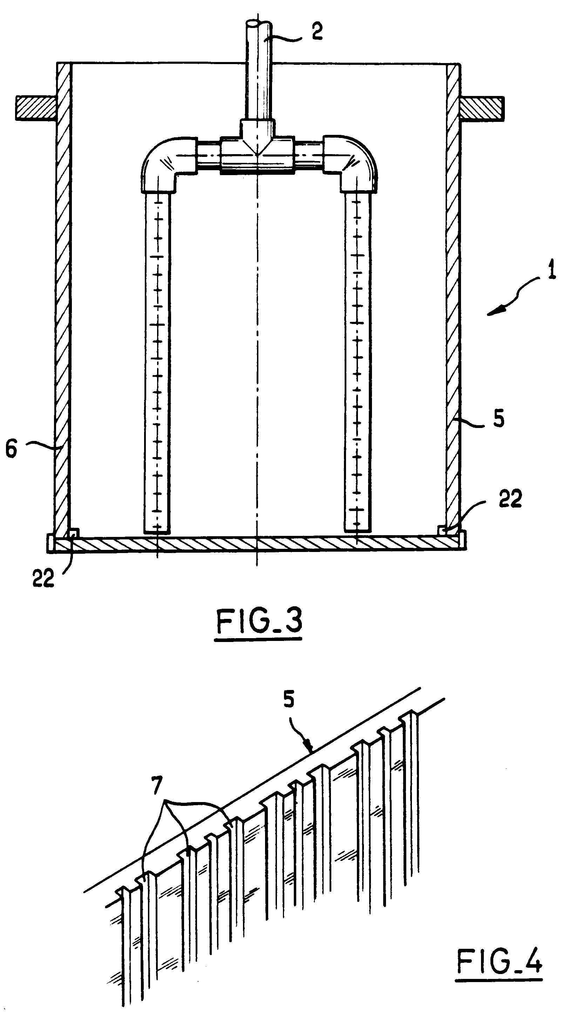

La présente invention est décrite plus en détail par référence aux dessins annexés.
- la fig. 1 est une vue de dessus d'un réacteur selon l'invention ;
- la fig. 2 est une section selon AA du réacteur de la figure 1 sans électrodes ;
- la fig. 3 est une section selon BB du réacteur de la figure 1 ;
- la fig. 4 est une vue partielle de la face interne d'une paroi verticale du réacteur ;
- la fig. 5 représente un cadre ;
- la fig. 6 représente une électrode du réacteur selon l'invention ;
Un réacteur selon l'invention tel que représenté sur les figures 1 à 6 comporte une cuve (1) parallèlépipédique munie d'un système d'alimentation en liquide (2), à l'une de ses extrémités ; d'un collecteur de sortie (3) et d'un trop-plein de sécurité (4), à l'autre extrémité. Le système d'alimentation peut être un répartiteur hydraulique amovible tel que représenté sur la figure 3. Le débit d'alimentation est réglé par l'intermédiaire d'une vanne non représentée. L'évacuation de l'effluent se fait par la partie inférieure du réacteur.
Le trop-plein permet d'assurer l'évacuation de l'effluent en cas de colmatage du collecteur de sortie (3). Les deux parois verticales opposées (5) et (6) sont munies, dans leur partie médiane, d'une série de rainures verticales (7) constituant les moyens permettant de monter les électrodes de façon amovible. Cette portion de paroi est illustrée plus précisément par la figure 2.

Des électrodes volumiques (9) et des contre-électrodes (8) sont installées dans la cuve.

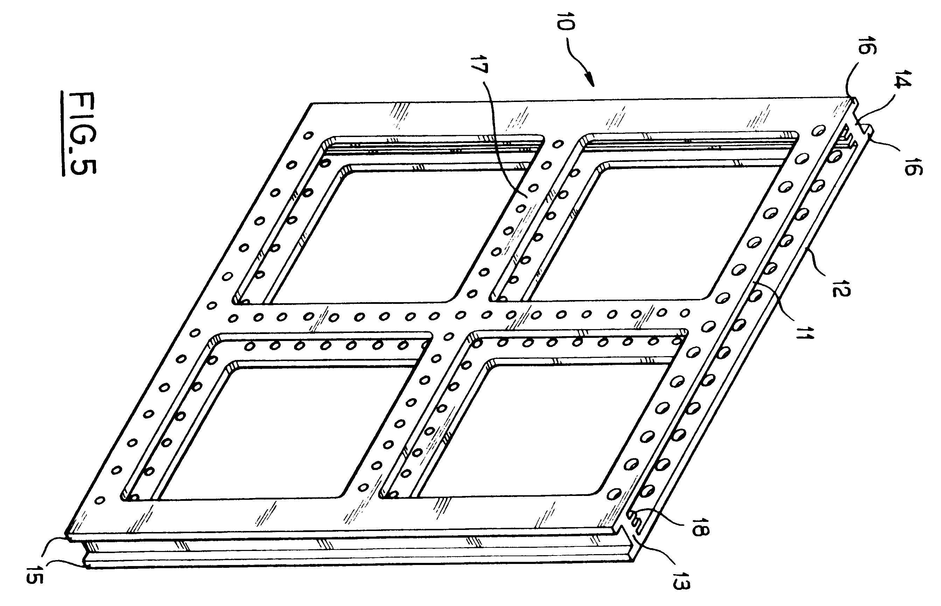

La figure 5 représente la cassette (10) d'une électrode amovible et démontable selon l'invention. Une telle cassette est constituée de deux cadres parallèles (11) et (12) reliés le long de leurs bords verticaux par des cloisons verticales (13) et (14). Ces cloisons sont situées en retrait par rapport aux bords verticaux des cadres (11) et (12) de manière à ménager des ergots (15) et (16) sur la face externe de ces cloisons (13) et (14).

Lors de l'installation de l'électrode dans la cuve, les ergots (15) et (16) coulissent dans les rainures (7) des parois de la cuve. Les dimensions et la position des rainures (7) de la cuve (1) sont bien entendu, prévues de sorte à être complémentaires des ergots (15) et (16).

Dans la cassette présentée à la figure 5, chacun des cadres (11) et (12) est muni d'un croisillon (17). Ce croisillon est particulièrement utile pour les électrodes de grande taille, de manière à leur conférer une certaine rigidité. De préférence, le croisillon est ajouré régulièrement de façon à offrir au flux hydraulique une surface d'électrolyse maximale. Il peut être omis pour les électrodes de petite dimension.

Les cloisons (13) et (14) sont munies, chacune sur leurs faces internes respectives en regard, de trois rainures (18).
Ces rainures (18) permettent d'installer, entre les cadres (11) et (12) de la cassette (10), successivement un assemblage géotextile/grillage PVC, un déployé métallique, puis le même assemblage géotextile/grillage PVC.

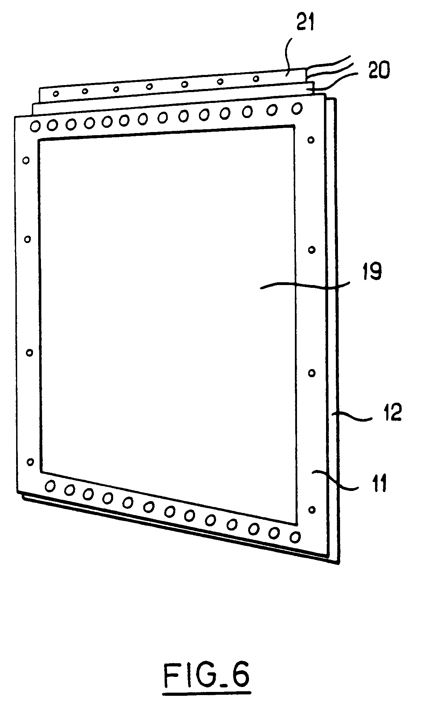

La figure 6 représente une électrode volumique démontable complète. Elle comporte une cassette (10) comportant cadres ajourés (11) et (12) entre lesquels sont installés successivement un premier assemblage géotextile/grillage PVC (19), un déployé métallique (20) surmonté d'une amenée de courant (21) permettant de le connecter aux bornes prévues à cet effet sur le réacteur, et un second assemblage géotextile/grillage PVC non représenté.

Les cassettes constituant le support des électrodes sont disposées sur des cales (22) pour éviter un phénomène de circulation en cascade à l'intérieur du réacteur.

Lorsque l'électrode volumique démontable est utilisée comme cathode, le réacteur selon l'invention étant destiné à diminuer la concentration en ions métalliques d'un effluent, l'espace compris entre les deux assemblages géotextile/grillage PVC est rempli d'un lit granulaire approprié. On peut utiliser des particules de carbone, du coke de pétrole notamment, des particules d'un polymère organique conducteur, des granules du même métal que le métal à déposer. La simplicité du chargement du lit granulaire résultant de la structure de l'électrode permet de charger le matériau actif de l'électrode très rapidement pour l'adapter aux cations métalliques à fixer.

Les exemples suivants illustrent deux essais de dépollution effectués à l'aide d'un réacteur selon l'invention.

### EXEMPLE 1

On a utilisé un réacteur selon l'invention contenant 5 cathodes volumiques amovibles ayant une section de 12x24 cm et une épaisseur de 3 cm conformes à celle de la fig. 4 remplies chacune de 500 grammes de particules de coke de pétrole et 6 anodes constituées chacune par une grille de titane ruthénié. Ladite section représente la surface offerte au front de circulation de l'effluent à traiter. Le géotextile utilisé est un géotextile Bidim ® b₂.

Un flux d'effluent contenant 60 ppm de cuivre, ayant un pH voisin de 2, a traversé perpendiculairement les anodes et cathodes successives. Le débit de circulation de l'effluent dans le réacteur était de 600 l/heure. L'intensité du courant appliqué au réacteur était de 20 A/kg de granules de coke de pétrole.

Dans les conditions opératoires précitées, le réacteur a permis d'amener la teneur en cuivre de l'effluent de 100 ppm à 2 ppm avec un rendement de 70 l/heure.

Ce type de réacteur, à électrodes de petites dimensions, est particulièrement adapté aux effluents provenant d'installation de traitement de surface, et plus spécifiquement à l'épuration en continu des effluents de rinçage statique.

### EXEMPLE 2

On a utilisé un réacteur selon l'invention contenant 5 anodes en titane ruthénié et 4 cathodes amovibles analogues à celle de la fig. 3 ayant une section de 39 x 50 cm, remplies chacune par 3 kg de particules de coke de pétrole.

Un flux d'effluent contenant 100 ppm de cuivre, ayant un pH voisin de 2, à traversé perpendiculairement les anodes et cathodes successives. Le débit de circulation de l'effluent dans le réacteur était de 13000 l/heure. L'intensité du courant appliqué au réacteur était de 13 à 17 A/kg de granules de coke de pétrole.

Dans les conditions opératoires précitées, le réacteur a permis d'amener la teneur en cuivre de l'effluent de 60 ppm à 2 ppm avec un rendement de 400 l/heure.

### EXEMPLE 3

Avec un réacteur et des conditions opératoires identiques à ceux de l'exemple 2, on a amené la teneur en cuivre d'un effluent de 100 ppm à 2 ppm avec un rendement de 350 l/heure.

Un réacteur de ce type, comportant des électrodes de grandes dimensions, est adapté au traitement électrolytique d'importants volumes d'effluents.

Lorsque l'électrode volumique constitue l'anode, le réacteur selon l'invention permet de traiter des effluents ayant une DCO très élevée, de manière à amener la DCO à une valeur compatible avec celle requise par les normes de rejets. Ce procédé d'épuration peut être mis en oeuvre pour les effluents contenant des composés électroactifs ou qui peuvent réagir avec l'oxygène formé à l'anode. Dans ce cas, la matière active introduite dans la cassette constituant l'électrode doit être capable de supporter sans dégradation les réactions d'oxydation qui vont se produire à sa surface. Des granules de titane ruthénié ou de titane platiné peuvent également être avantageusement utilisés.

## Revendications

1. Réacteur électrochimique pour le traitement d'effluents aqueux, comportant une cuve **(1)** dans laquelle sont placées de façon alternée des électrodes de polarité opposée **(8, 9)**, les électrodes **(9)** correspondant à l'une des polarités étant des électrodes volumiques à remplissage d'un matériau actif granulaire qui sont amovibles, de même que les contre-électrodes **(8)** correspondant à l'autre polarité, chaque électrode volumique **(9)** étant délimitée par deux parois qui sont perméables aux effluents aqueux transversalement par rapport à la dimension verticale de l'électrode correspondante, chaque contre-électrode **(8)** étant elle aussi perméable auxdits effluents s'écoulant transversalement.

2. Réacteur selon la revendication 1, caractérisé en ce que les électrodes volumiques amovibles **(9)** ont pour support respectif une cassette **(10)** constituée par deux cadres **(11, 12)**, approximativement rectangulaires, sur cette cassette **(10)** étant fixés, de manière également amovible, deux parois perméables aux effluents aqueux et un collecteur situé entre les deux parois, le matériau actif étant maintenu dans l'espace délimité par la cassette **(10)** et les parois perméables, la cassette **(10)** étant munie de moyens **(15, 16)** permettant de la monter de façon amovible sur la cuve **(1)**, munie elle-même de moyens appropriés **(7)** assurant le montage des parois perméables et du collecteur également de manière amovible sur la cassette **(10)**.

3. Réacteur selon l'une quelconque des revendications 1 ou 2, caractérisé en ce que le matériau actif granulaire est du coke de pétrole.

4. Réacteur selon la revendication 3, caractérisé en ce que le matériau actif des électrodes volumiques à remplissage **(9)** est un matériau de cathode.

5. Réacteur selon la revendication 3, caractérisé en ce que le matériau acticf des électrodes volumiques à remplissage **(9)** est un matériau d'anode.

6. Réacteur selon l'une quelconque des revendications 2 à 5, caractérisé en ce que le matériau constituant la cassette **(10)** de chaque électrode volumique amovible **(9)** est choisi parmi le groupe comprenant les polychlorures de vinyle, les polypropylènes et les polychlorures de vinyle surchlorés.

7. Réacteur selon l'une quelconque des revendications 2 à 6, caractérisé en ce que les parois perméables de chaque électrode amovible sont constituées par un assemblage géotextile/grillage PVC.

8. Réacteur selon l'une quelconque des revendications 2 à 7, caractérisé en ce que le collecteur est un déployé métallique.

9. Procédé de traitement d'un effluent aqueux dans un réacteur électrochimique selon l'une quelconque des revendications 1 à 8, caractérisé en ce qu'il consiste à soumettre l'effluent à une percolation transversale par rapport à la dimension verticale de chaque électrode volumique **(9)**.

10. Procédé selon la revendication 9, dans lequel l'effluent aqueux contient un métal lourd, caractérisé en ce qu'il consiste :
- à soumettre ledit effluent à une électrolyse dans un premier réacteur électrochimique selon la revendication 4 et l'une quelconque des revendications 6 à 8 en tant que revendications dépendantes de la revendication 4, lesdites électrodes volumiques amovibles **(9)** de ce premier réacteur étant donc des cathodes ;
- à retirer lesdites cathodes **(9)** de ladite cuve **(1)**, lorsque ledit matériau actif granulaire est saturé en métal lourd ; et
- à utiliser lesdites cathodes **(9)** comme anodes solubles dans des deuxièmes réacteurs électrochimiques pour électro-affiner ledit métal lourd.

11. Procédé pour la diminution de la DCO des effluents aqueux, caractérisé en ce qu'il consiste à soumettre lesdits effluents à une électrolyse dans un réacteur électrochimique selon la revendication 4 et l'une quelconques des revendications 6 à 8 en tant que revendications dépendantes de la revendication 4.

## Claims

1. Electrochemical reactor for the treatment of aqueous effluents, having a vessel (1) in which electrodes with opposite polarities (8, 9) are placed in alternation, the electrodes (9) corresponding to one of the polarities being volume electrodes filled with a granular active material, which are removable, in the same way as the counter-electrodes (8) corresponding to the other polarity, each volume electrode (9) being delimited by two walls which are permeable to the aqueous effluents transversely with respect to the vertical dimension of the corresponding electrode, each counter-electrode (8) also being permeable to the said effluents flowing transversely.

2. Reactor according to Claim 1, characterised in that the removable volume electrodes (9) have, for a respective support, a cartridge (10) consisting of two approximately rectangular frames (11, 12), there being fixed to this cartridge (10), so as to be removable also, two walls permeable to the aqueous effluents and a distributor situated between the two walls, the active material being held in the space delimited by the cartridge (10) and the permeable walls, the cartridge (10) being equipped with means (15, 16) enabling it to be mounted removably on the vessel (1), the latter itself being equipped with appropriate means (7) for mounting the permeable walls and the collector, also removably, on the cartridge (10).

3. Reactor according to either one of Claims 1 or 2, characterised in that the granular active material is oil coke.

4. Reactor according to Claim 3, characterised in that the active material of the filled volume electrodes (9) is a cathode material.

5. Reactor according to Claim 3, characterised in that the active material of the filled volume electrodes (9) is an anode material.

6. Reactor according to any one of Claims 2 to 5, characterised in that the material constituting the cartridge (10) of each removable volume electrode (9) is chosen from the group comprising polyvinyl chlorides, polypropylenes and postchlorinated polyvinyl chlorides.

7. Reactor according to any one of Claims 2 to 6, characterised in that the permeable walls of each removable electrode are formed by a geotextile/PVC netting assembly.

8. Reactor according to any one of Claims 2 to 7, characterised in that the distributor is a piece of expanded metal.

9. Method for treating an aqueous effluent in an electrochemical reactor according to any one of Claims 1 to 8, characterised in that it consists of subjecting the effluent to percolation in a transverse direction with respect to the vertical dimension of each volume electrode (9).

10. Process according to Claim 9, in which the aqueous effluent contains a heavy metal, characterised in that it consists of:
- subjecting the said effluent to electrolysis in a first electrochemical reactor according to Claim 4 and any one of Claims 6 to 8 as claims dependent on Claim 4, the said removable volume electrodes (9) of this first reactor therefore being cathodes;
- withdrawing the said cathodes (9) from the said vessel (1) when the said granular active material is saturated with heavy metal; and
- using the said cathodes (9) as soluble anodes in second electrochemical reactors in order to refine the said heavy metal electrolytically.

11. Process for reducing the COD of aqueous effluents, characterised in that it consists of subjecting the said effluents to electrolysis in an electrochemical reactor according to Claim 4 and any one of Claims 6 to 8 as claims dependent on Claim 4.

## Patentansprüche

1. Elektrochemischer Reaktor zum Behandeln von Abwässern mit einem Behälter (1), in dem abwechselnd entgegengesetzt gepolte Elektroden (8, 9) angeordnet sind, wobei die Elektroden (9), die der einen Polung entsprechen, Volumenelektroden sind, die mit einem aktiven Granulatmaterial gefüllt sind, und ebenso wie die Gegenelektroden (8), die der anderen Polung entsprechen, abnehmbar sind, jede Volumenelektrode (9) von zwei Wänden begrenzt ist, die für die Abwässer quer bezüglich der vertikalen Abmessung der entsprechenden Elektrode durchlässig sind, und jede Gegenelektrode (8) gleichfalls für die querströmenden Abwässer durchlässig ist.

2. Reaktor nach Anspruch 1 dadurch gekennzeichnet, daß die abnehmbaren Volumenelektroden (9) als Träger jeweils eine Kassette (10) aufweisen, die aus zwei annähernd rechtwinkligen Rahmen (11, 12) besteht, wobei an dieser Kassette (10) gleichfalls abnehmbar zwei Wände, die für die Abwässer durchlässig sind, und ein Kollektor befestigt sind, der zwischen den beiden Wänden angeordnet ist, das aktive Material im Zwischenraum gehalten ist, der von der Kassette (10) und den durchlässigen Wänden begrenzt ist, und die Kassette (10) mit Einrichtungen (15, 16) versehen ist, die es erlauben, sie abnehmbar am Behälter (1) zu montieren, der seinerseits mit geeigneten Einrichtungen (7) versehen ist, die die Montage der durchlässigen Wände und des Kollektors gleichfalls abnehmbar an der Kassette (10) erlauben.

3. Reaktor nach einem der Ansprüche 1 oder 2 dadurch gekennzeichnet, daß das aktive Granulatmaterial Petrolkoks ist.

4. Reaktor nach Anspruch 3 dadurch gekennzeichnet, daß das aktive Material zum Füllen der Volumenelektroden (9) ein Kathodenmaterial ist.

5. Reaktor nach Anspruch 3 dadurch gekennzeichnet, daß das aktive Material zum Füllen der Volumenelektroden (9) ein Anodenmaterial ist.

6. Reaktor nach einem der Ansprüche 2 bis 5 dadurch gekennzeichnet, daß das Material, das die Kassette (10) jeder abnehmbaren Volumenelektrode (9) bildet, aus einer Gruppe gewählt ist, die Polyvenylchloride, Polypropylene und nachchlorierte Polyvenylchloride umfaßt.

7. Reaktor nach einem der Ansprüche 2 bis 6 dadurch gekennzeichnet, daß die durchlässigen Wände jeder abnehmbaren Elektrode aus einer Geotextil/PVC-Netz-Anordnung besteht.

8. Reaktor nach einem der Ansprüche 2 bis 7 dadurch gekennzeichnet, daß der Kollektor eine metallische Fahne ist.

9. Verfahren zum Behandeln eines Abwassers in einem elektrochemischen Reaktor nach einem der Ansprüche 1 bis 8 dadurch gekennzeichnet, daß es darin besteht, daß das Abwasser einer Perkulation quer bezüglich der vertikalen Abmessung jeder Volumenelektrode (9) unterworfen wird.

10. Verfahren nach Anspruch 9, bei dem das Abwasser ein Schwermetall enthält, dadurch gekennzeichnet, daß es darin besteht, daß
- das Abwasser einer Elektrolyse in einem ersten elektrochemischen Reaktor nach dem Anspruch 4 und einem der Ansprüche 6 bis 8 diese nach Anspruch 4 unterworfen wird, wobei die abnehmbaren Volumenelektroden (9) des ersten Reaktors dessen Kathoden sind,
- die Kathoden (9) aus dem Behälter (1) herausgenommen werden, wenn das aktive Granulatmaterial mit dem Schwermetall gesättigt ist, und
- die Kathoden (9) als lösliche Anoden in zweiten elektrochemischen Reaktoren zum elektrischen Rückgewinnen des Schwermaterials verwandt werden.

11. Verfahren zum Verringern des chemischen Sauerstoffbedarfes von Abwässern dadurch gekennzeichnet, daß es darin besteht, daß die Abwässer einer Elektrolyse in einem elektrochemischen Reaktor nach Anspruch 4 und nach einem der Ansprüche 6 bis 8 diese nach Anspruch 4 unterworfen werden.
